# FASCICULE DE BREVET EUROPEEN

(11) **EP 2 543 594 B1**
(45) Date de publication et mention de la délivrance du brevet: **06.05.2015**
(21) Numéro de dépôt: 12002290.0
(22) Date de dépôt: 29.03.2012
(51) Int. Cl.: B64D 1/22, B66C 13/06, B66C 1/36, B66C 15/06

(54) **Dispositif de fixation et de contrôle de l'inclinaison d'une élingue, et aéronef**
Vorrichtung zur Befestigung und Kontrolle der Neigung einer Aussenlastbefestigung, und Luftfahrzeug
Device for attaching and controlling the inclination of a sling, and aircraft

(30) Priorité: 07.07.2011 FR 1102147
(43) Date de publication de la demande: 09.01.2013
(73) Titulaire: Airbus Helicopters, 13725 Marignane Cedex (FR)
(72) Inventeur: Figoureux, David, 13300 Salon de Provence (FR); Lorenzini, Stéphane, 13250 Saint Chamas (FR)
(74) Mandataire: GPI & Associés

(56) Documents cités:
- EP-A1- 2 168 871
- WO-A1-01/74143
- US-A- 4 378 919

## Description

La présente invention concerne un dispositif de fixation et de contrôle de l'inclinaison d'une élingue, et un aéronef muni dudit dispositif. 1-1

Le domaine technique de l'invention est donc celui des dispositifs d'accrochage d'une charge externe à un aéronef.

En effet, un aéronef, et plus particulièrement un giravion de type hélicoptère, peut être équipé de manière optionnelle d'une installation pour transporter des charges externes.

Ainsi, l'aéronef comporte généralement une structure porteuse, un crochet-délesteur tournant ou non tournant étant fixé à cette structure porteuse de ce giravion. Une élingue est alors accrochée à ce crochet-délesteur afin de permettre l'emport de charges externes lourdes.

Le crochet-délesteur peut être fixé à la structure porteuse par de multiples moyens, par exemple :
- un premier moyen dénommé parfois « sling » en langue anglaise, ce premier moyen est du type cardan en étant muni de deux axes de pivotement orthogonaux entre eux, l'application de l'effort de l'élingue se faisant en un point sur la structure porteuse,
- un deuxième moyen dénommé parfois « swing » en langue anglaise, ce deuxième moyen comportant un cadre suspendu à la structure porteuse par quatre câbles de suspension,
- un troisième moyen mettant en oeuvre une poutre à laquelle est accroché le crochet-délesteur, la poutre étant généralement fixée en deux points à la structure porteuse, et,
- un quatrième moyen mettant en oeuvre une perche fixée sur la boîte de transmission principale de puissance du giravion, le crochet-délesteur étant articulé à cette perche.

En outre, le crochet-délesteur autorise le largage de la charge externe en vol, afin de libérer cette charge externe en un lieu déterminé ou lorsqu'une situation de détresse se présente.

Lors d'un vol, l'élingue de l'aéronef tend à se déplacer par rapport à cet aéronef ce qui peut conduire à des accidents.

En premier lieu, il est courant d'utiliser un giravion muni d'une élingue pour positionner une charge externe lourde à un endroit précis. Dans des conditions de vol difficiles, la charge peut se bloquer contre un obstacle, endommager un élément extérieur tel qu'un bâtiment ou encore heurter un opérateur.

Les règlements de certification à respecter pour obtenir une autorisation de vol avec élingue n'impose pas de systèmes de surveillance particuliers sauf dans le cas d'une charge liée au sol. Par contre, les réglementations opérationnelles requièrent parfois des précautions, comme l'emploi de rétroviseurs pour surveiller le balancement de l'élingue par exemple.

Dans le cas d'une charge liée au sol, les réglementations opérationnelles imposent un système de visualisation ou d'alarme pour vérifier que l'élingue ne se déplace pas au-delà d'une enveloppe d'angle limite autorisée.

En second lieu, si la charge externe ou l'élingue s'accroche à un obstacle au sol, le giravion se trouve bloqué. Du fait de l'inertie du giravion, des efforts importants sont exercés sur l'élingue. Ces efforts peuvent entraîner une situation catastrophique pour le maintien en vol de l'hélicoptère.

Par exemple, ces efforts peuvent entraîner une rupture de l'élingue ce qui libère le giravion. Cependant, compte tenu de la brutalité de la manoeuvre, l'inclinaison du disque formé par les pales du rotor peut osciller vers l'arrière durant une phase transitoire. Les pales risquent alors de heurter, voire de couper la poutre de queue du giravion.

De plus, la portion d'élingue restant fixée au giravion tend à remonter brutalement et risque d'interférer avec un rotor du giravion.

On comprend donc qu'il est judicieux de surveiller la charge externe pour éviter un accident.

Les documents suivants présentent l'arrière plan technologique des installations de transport de charge.

Plus précisément, le document GB2437407 divulgue l'existence d'un système muni d'un crochet pour suspendre une charge et d'un moyen de détachement de cette charge.

Le document FR2575550 présente un système qui fournit en temps réel le poids supporté par une pluralité de crochet-délesteur.

Le document FR2197766 prévoit un moyen explosif pour décrocher le crochet supportant la charge et sectionner l'élingue en cas de besoin.

Par ailleurs, pour éviter un incident provoqué par une inclinaison importante de l'élingue accrochant une charge externe, divers dispositifs sont connus.

Le document EP 0259250 montre un hélicoptère auquel est suspendue une benne pourvue de stabilisateurs.

Le document FR2149777 présente un système de stabilisation d'une charge externe sous un aéronef prévoyant d'agir sur les commandes de vol afin que l'aéronef réalise des mouvements correcteurs pour atténuer un mouvement pendulaire d'une charge externe..

Le document JP19960101019 décrit un treuil apte à limiter les accélérations subies par un corps, suspendu à ce treuil via une élingue.

Le document GB1074465 présente un dispositif pour limiter l'angle de balancement d'une élingue fixée à un treuil par rapport à l'axe de la pesanteur.

Il en va de même pour le document US3904156 qui prévoit l'action de vérins sur une élingue rigide.

Le document FR2661887 prévoit un dispositif permettant à un pilote de maintenir une élingue selon la pesanteur durant un vol stationnaire.

Le document FR 2954493 décrit un dispositif d'aide au pilotage comportant un moyen de détermination principal pour quantifier l'angle d'une élingue par rapport à un axe vertical de l'aéronef.

On connaît aussi les documents EP 2 2168 871, qui est considéré l'état de la technique le plus proche, US 4 378 919 et WO 01/74143.

La présente invention a alors pour objet de proposer un dispositif de fixation et de contrôle de l'inclinaison d'une élingue simple et fiable pour indiquer à un individu qu'une élingue atteint une position susceptible d'engendrer un incident.

Selon l'invention, un dispositif de fixation et de contrôle de l'inclinaison d'une élingue par rapport à une cellule d'un aéronef est muni d'un crochet-délesteur portant une élingue et d'un barreau s'étendant selon un axe d'extension d'une première extrémité basse vers une deuxième extrémité haute, la première extrémité étant solidaire du crochet délesteur et la deuxième extrémité étant pourvue d'un moyen de fixation articulé apte à être fixé à la cellule,

Ce dispositif est notamment remarquable en ce qu'il comprend :
- un plateau lié par au moins trois organes élastiques munis chacun d'un moyen de liaison à la cellule, ce plateau étant fixé autour du barreau à l'aide d'une rotule principale coulissante pour que le plateau puisse simultanément pivoter par rapport au barreau et coulisser le long de l'axe d'extension de ce barreau, chaque organe élastique étant articulé au plateau par une articulation,
- un moyen de rétention muni d'un moyen d'immobilisation apte à être fixé à ladite cellule, ledit moyen de rétention entourant le plateau et délimitant une enveloppe à angle limite de débattement du plateau et de ladite élingue ;
- un capteur de déplacement d'un moyen mobile de chaque organe élastique relié à un moyen d'alerte pour déclencher une alerte suite à un pivotement dudit plateau provoqué par un contact entre ledit plateau et le moyen de rétention induit par un déplacement de l'élingue au-delà d'un angle limite.

De plus, le moyen de liaison et l'articulation de chaque organe élastique présentent favorablement deux degrés de liberté en rotation. Ainsi, le moyen de liaison et l'articulation peuvent être du type rotule et donc comprendre par exemple chacun une rotule secondaire.

On comprend que l'on entend par « rotule principale » la rotule liant le barreau au plateau, et par « rotule secondaire » toutes les autres rotules du dispositif.

Dès lors, lorsque l'élingue présente une angulation par rapport à la cellule inférieure à l'angle limite, le plateau évolue dans l'enveloppe à angle limite. Selon une variante, le plateau peut évoluer selon une translation circulaire entre deux plans parallèles contenant le moyen de rétention en l'absence de contact avec ce moyen de rétention

Par contre, lorsque l'élingue atteint l'angle limite, le plateau entre en contact avec le moyen de rétention. Si l'angulation de l'élingue augmente, la rotule principale autorise une inclinaison du plateau par rapport au moyen de rétention et au barreau.

Au moins un organe élastique est alors sollicité, un moyen mobile de cet organe élastique étant mis en mouvement. Le capteur de déplacement détecte alors un tel mouvement et déclenche une alerte.

L'alerte peut être une alarme sonore ou visuelle transmise à un équipage de l'aéronef pour lui signaler un angle dangereux de l'élingue. L'équipage peut alors décider de larguer l'élingue par sécurité.

Selon une autre variante, l'alerte peut être un signal proportionnel à l'angulation de l'élingue, le moyen d'alerte affichant alors cette angulation.

Ce dispositif peut de plus comporter une ou plusieurs des caractéristiques additionnelles qui suivent.

Par exemple, le moyen d'immobilisation comporte une pluralité de bras de fixation solidaire du moyen de rétention et apte à coopérer avec la cellule.

Le moyen de rétention est alors immobilisé par rapport à la cellule, le moyen de rétention étant fixé à cette cellule.

Selon un autre aspect, la rotule principale comporte une partie partiellement sphérique et une partie oscillante coopérant avec la partie partiellement sphérique. Dès lors, la partie oscillante est solidaire du plateau et la partie partiellement sphérique est traversée par le barreau.

Par conséquent, le plateau peut osciller autour du barreau, le plateau pouvant de plus se déplacer le long de ce barreau.

Par ailleurs, le moyen de fixation articulé peut être un organe de liaison à deux degrés de liberté autorisant un pivotement du barreau par rapport à une cellule selon deux axes de rotation.

L'organe de liaison peut être un organe de type cardan notamment.

Selon une réalisation préférée, le moyen de rétention est un cerceau.

La forme du cerceau est définie par les angulations autorisée de l'élingue, voire par la nature du moyen de fixation articulé. En effet, le moyen de fixation articulé présentant deux axes de rotation décalés peut induire un cerceau de forme elliptique.

Par ailleurs, l'organe élastique peut être un vérin muni d'un piston coopérant avec un moyen élastique, tel qu'un ressort, le capteur de déplacement coopérant avec le piston.

Le capteur de déplacement peut être un contacteur mécanique actionné par le piston à partir d'une translation prédéterminée de ce piston.

Outre un dispositif, l'invention vise aussi un aéronef

Selon l'invention, un aéronef est muni d'une cellule et d'un dispositif de fixation et de contrôle de l'inclinaison d'une élingue par rapport à cette cellule, ce dispositif étant muni d'un crochet-délesteur portant une élingue et d'un barreau s'étendant selon un axe d'extension d'une première extrémité basse vers une deuxième extrémité haute, la première extrémité étant solidaire du crochet délesteur et la deuxième extrémité étant pourvue d'un moyen de fixation articulé fixé à la cellule.

Le dispositif est du type décrit précédemment en comprenant :
- un plateau lié par au moins trois organes élastiques munis chacun d'un moyen de liaison à ladite cellule, ce plateau étant fixé autour du barreau à l'aide d'une rotule principale coulissante pour que le plateau puisse simultanément pivoter par rapport au barreau et coulisser le long de l'axe d'extension de ce barreau, chaque organe élastique étant articulé au plateau par une articulation,
- un moyen de rétention muni d'un moyen d'immobilisation fixé à ladite cellule, ledit moyen de rétention entourant le plateau et délimitant une enveloppe à angle limite de débattement du plateau et de ladite élingue ;
- un capteur de déplacement d'un moyen mobile de chaque organe élastique relié à un moyen d'alerte pour déclencher une alerte suite à un pivotement dudit plateau provoqué par un contact entre ledit plateau et le moyen de rétention induit par un déplacement de l'élingue au-delà d'un angle limite.

L'invention et ses avantages apparaîtront avec plus de détails dans le cadre de la description qui suit avec des exemples de réalisation donnés à titre illustratif en référence aux figures annexées qui représentent :
- la figure 1, une vue isométrique d'un aéronef selon l'invention,
- la figure 2, un schéma représentant un organe élastique,
- les figures 3 à 5, des vues explicitant le fonctionnement de l'invention.

Les éléments présents dans plusieurs figures distinctes sont affectés d'une seule et même référence.

On note que trois directions X, Y et Z orthogonales les unes par rapport aux autres sont représentées sur les figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

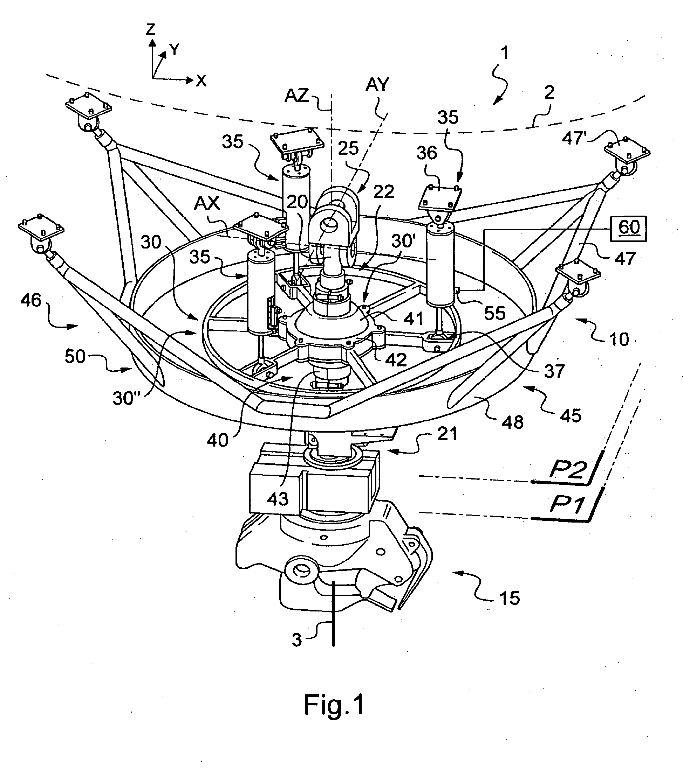

La figure 1 présente un aéronef 1 muni d'une cellule 2 s'étendant longitudinalement d'une extrémité avant vers une extrémité arrière, transversalement d'une premier côté vers une deuxième côté, et en élévation d'une portion inférieure vers une portion supérieure à l'aplomb de la portion inférieure.

La cellule 2 n'est pas représentée en tant que telle sur la figure 1 pour ne pas alourdir inutilement cette figure 1.

Par ailleurs, la figure 1 présente un dispositif 10 de fixation et de contrôle d'inclinaison d'une élingue 3 destiné à être fixé à la cellule 2.

Ce dispositif 10 inclut un barreau 20 portant un crochet-délesteur 15. Dès lors, le barreau 20 s'étend le long d'un axe d'extension AZ d'une première extrémité 21 basse fixée au crochet-délesteur 15 vers une deuxième extrémité 22 articulé à la cellule 2 par un moyen de fixation articulée 25.

Ce moyen de fixation articulé 25 peut être un organe de liaison a deux degrés de liberté en rotation, pour permettre au barreau d'effectuer une rotation par rapport un premier axe de rotation AX et à un deuxième axe de rotation AY.

Par exemple, le premier axe de rotation est parallèle à la direction longitudinale de l'aéronef soit à son axe de roulis, le deuxième axe de rotation pouvant être parallèle à la direction transversale de l'aéronef soit à son axe de tangage.

L'ensemble comprenant le barreau 20, le crochet-délesteur 15 et l'élingue 3 peut alors se déplacer dans un cône géométrique par rapport à la cellule.

Par ailleurs, le dispositif 10 inclut un plateau 30 disposé autour du barreau 20.

Dès lors, le plateau 30 est lié au barreau 20 par une rotule principale 40. La rotule principale 40 inclut une partie partiellement sphérique 41 coopérant avec une partie oscillante 42. La partie partiellement sphérique 41 peut alors être qualifiée de partie interne, la partie oscillante 42 pouvant être qualifiée de partie externe dans la mesure où la partie partiellement sphérique 41 est disposée dans la partie oscillante 42.

Dans ces conditions, la partie oscillante 42 est solidarisée au plateau 30, par des boulons par exemple, la partie partiellement sphérique 41 étant traversée par le barreau 20. On note qu'une bague 43 peut être disposée entre le barreau 20 et la partie partiellement sphérique 41.

Le plateau 30 est de plus lié à la cellule 2 par au moins trois organes élastiques 35. Chaque organe élastique 35 est alors articulé d'une part au plateau 30 par une articulation 37 à au moins deux degrés de liberté en rotation par exemple, et, d'autre part à la cellule 2 par un moyen de liaison 36 à au moins deux degrés de liberté en rotation par exemple.

Chaque articulation 37 et chaque moyen de liaison 36 peut être du type rotule en comprenant une rotule secondaire selon l'exemple représenté.

Selon la réalisation de la figure 1, une zone périphérique interne 30' du plateau 30 est alors fixée à la partie oscillante 42 de la rotule principale 40, une zone périphérique externe 30" du plateau 30 étant articulée à au moins trois organes élastiques 35.

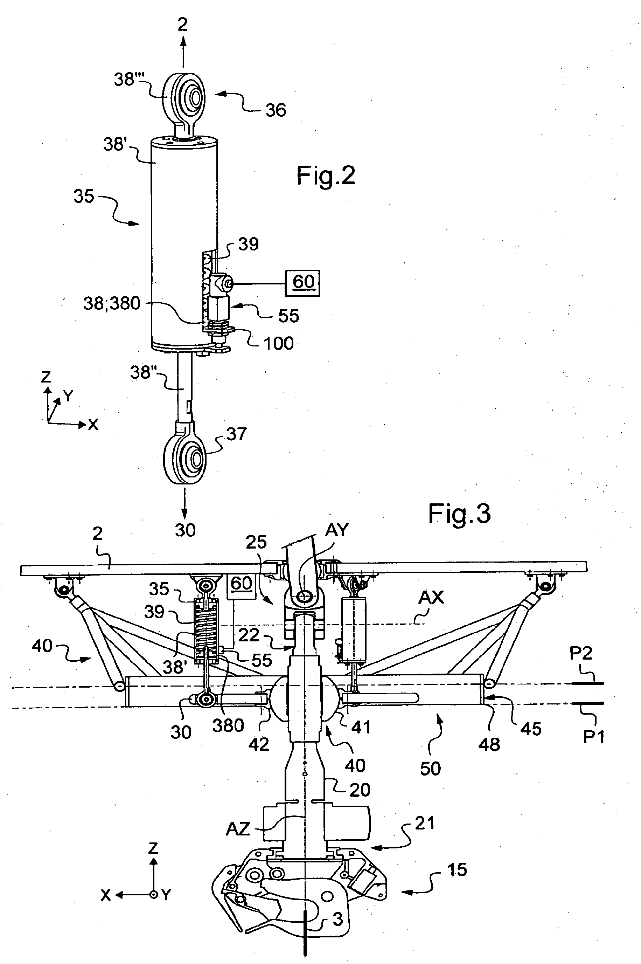

En référence à la figure 2, chaque organe élastique 35 peut être un vérin muni d'un organe mobile 38 de type piston 380 coulissant dans un corps 38', un moyen élastique 39 étant disposé entre le corps 38' et le piston 380. Par exemple, le moyen élastique est un ressort.

Dès lors, le piston 380 peut être solidaire d'une tige 38" ayant une articulation 37 de type rotule, le corps 38' comportant le moyen de liaison 36 de type rotule 38"'. L'articulation 37 est alors fixée au plateau 30, le moyen de liaison 36 étant fixé à la cellule 2.

En outre, on note que le dispositif comprend un capteur de déplacement 55 fixé au corps 38'.

Par exemple, ce capteur de déplacement 55 est un contacteur mécanique pouvant être activé par une saillie 100 du piston 380. Les capteurs de déplacement 55 des organes élastiques 35 sont alors reliés à un moyen d'alerte 60.

En référence à la figure 1, le dispositif 10 est de plus pourvu d'un moyen de rétention 45 pourvu d'un moyen d'immobilisation 46. Ce moyen de rétention 45 délimite une enveloppe 50 de manière à circonscrire le déplacement du plateau 30 dans un cône correspondant à l'angle limité autorisé. Cette enveloppe est alors dite « enveloppe à angle limite » par commodité.

Selon la réalisation préférée présentée sur la figure 1, le moyen de rétention comprend un cerceau 48 agencé dans un plan géométrique P. Le moyen d'immobilisation peut alors posséder une pluralité de bras de fixation 47, ces bras de fixation étant solidarisés à la cellule 2 par des attaches 47'.

Le moyen de rétention est donc solidarisé à la cellule 2 alors qu'au contraire l'ensemble mobile comprenant le barreau 20, le plateau 30 et le crochet-délesteur 15 est mobile par rapport à cette cellule 2.

On définit la géométrie du moyen de rétention en fonction de l'angle limite autorisé pour l'élingue et de la cinématique de cette élingue.

En référence à la figure 3, au repos à savoir lorsque l'axe d'extension AZ est dirigé selon la direction de la pesanteur, chaque organe élastique est dans une position étendue. Le piston 380 d'un organe élastique est alors en butée inférieure contre le corps de cet organe élastique.

Chaque saillie 100 de chaque organe élastique n'agit alors pas sur le capteur de déplacement associé. Le moyen d'alerte détermine alors que l'élingue présente une angulation par rapport à la structure inférieure ou égale à un angle limite prédéterminé par le constructeur.

On note que tant que le plateau 30 se déplace selon une translation circulaire entre deux plans inférieur P1 et supérieur P2 parallèles, ce plateau 30 est contenu dans l'enveloppe 50 à angle limite.

Ce plan inférieur P1 et ce plan supérieur P2 sont séparés d'une épaisseur e. L'enveloppe 50 est donc physiquement délimitée transversalement et longitudinalement par le moyen de rétention, et géométriquement délimitée en élévation par deux plans inférieur P1 et supérieur P2.

Par suite, quand le plateau 30 est contenu dans l'enveloppe 50 à angle limite, on comprend que l'élingue présente une angulation avec la cellule 2 inférieure ou égale à l'angle limite autorisé.

En l'occurrence, dans les conditions de la figure 3, l'angulation de l'élingue est nulle.

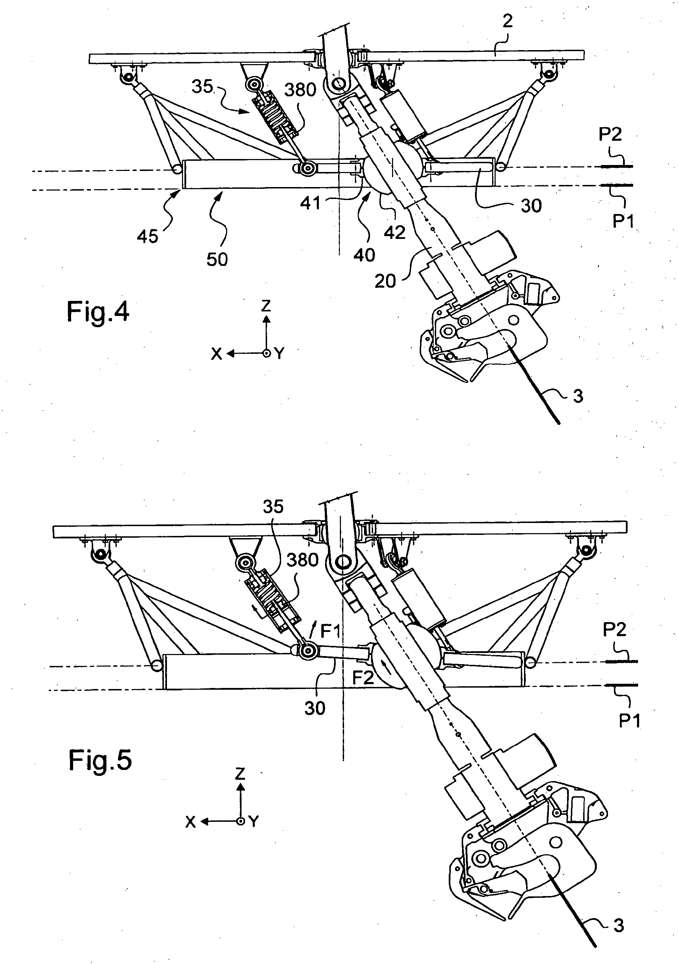

En référence à la figure 4, lorsque l'élingue s'incline par rapport à la cellule 2, le plateau 30 effectue une translation circulaire au sein de l'enveloppe 50. Le plateau évolue alors entre le plan inférieur P1 et le plan supérieur P2 séparés d'une épaisseur e.

On note, en outre, que le plateau oscille autour de la partie partiellement sphérique 42 de la rotule principale 40. De plus, le plateau 30 peut coulisser conjointement avec la partie partiellement sphérique 42 le long du barreau pour ne pas entraver le mouvement de l'élingue.

On constate que les organes mobiles 38 de chaque organe élastique 35 ne bouge pas, ces organes élastiques demeurant en position étendue.

Lorsque l'élingue atteint un angle limite, le plateau 30 est en contact contre le moyen de rétention 45.

En référence à la figure 5, au-delà de cet angle limite, le plateau 30 continue son mouvement en pivotant et coulissant respectivement conformément aux flèches F1, F2.

Une partie du plateau 30 sort alors de l'enveloppe 50 en traversant partiellement le plan supérieur P2.

Par suite, au moins un organe élastique 35 est comprimé par le plateau 30, l'organe mobile 38 de cet organe élastique étant mis en mouvement de manière à permettre une rétraction de l'organe élastique.

Le mouvement de l'organe mobile 38 est alors détecté par le capteur de déplacement de l'organe élastique. Le capteur de déplacement envoie alors un signal au moyen d'alerte pour l'en informer.

Ce moyen d'alerte 60 peut ainsi informer l'équipage de l'aéronef que l'élingue présente une angulation indue, par le biais d'une alarme sonore ou visuelle par exemple.

De plus, on comprend que le dispositif 10 ne bloque pas l'élingue lorsque l'angulation de l'élingue par rapport à la cellule 2 dépasse l'angle limite.

En effet, la rotule principale 40 est dimensionnée afin de permettre un déplacement relatif entre le barreau 20 et le plateau 30 suffisant pour minimiser les risques d'arrachement du moyen de rétention, même lorsque l'angulation de l'élingue par rapport à la cellule 2 dépasse l'angle limite.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif (10) de fixation et de contrôle de l'inclinaison d'une élingue (3) par rapport à une cellule (2) d'un aéronef (1), ce dispositif (10) étant muni d'un crochet-délesteur (15) portant une élingue (3) et d'un barreau (20) s'étendant selon un axe d'extension (AZ) d'une première extrémité (21) basse vers une deuxième extrémité (22) haute, ladite première extrémité (21) étant solidaire du crochet délesteur (15) et ladite deuxième extrémité (22) étant pourvue d'un moyen de fixation articulé (25) apte à être fixé à ladite cellule (2),
**caractérisé en ce que** ledit dispositif (10) comprend :
- un plateau (30) lié par au moins trois organes élastiques (35) munis chacun d'un moyen de liaison (36) à ladite cellule (2), ce plateau (30) étant fixé autour du barreau (20) à l'aide d'une rotule principale (40) coulissante pour que le plateau (30) puisse simultanément pivoter par rapport au barreau (20) et coulisser le long de l'axe d'extension (AZ) de ce barreau (20), chaque organe élastique (35) étant articulé au plateau (30) par une articulation (37),
- un moyen de rétention (45) muni d'un moyen d'immobilisation (46) apte à être fixé à ladite cellule (2), ledit moyen de rétention (45) entourant le plateau (30) et délimitant une enveloppe (50) d'angle limite de débattement du plateau (30) et de ladite élingue (3) ;
- un capteur de déplacement (55) d'un moyen mobile (38) de chaque organe élastique (35) relié à un moyen d'alerte (60) pour déclencher une alerte suite à un pivotement dudit plateau (30) provoqué par un contact entre ledit plateau (30) et le moyen de rétention (45) induit par un déplacement de l'élingue (3) au-delà d'un angle limite.

2. Dispositif selon la revendication 1,
**caractérisé en ce que** ledit moyen de liaison (36) est de type rotule.

3. Dispositif selon l'une quelconque des revendications 1 à 2,
**caractérisé en ce que** ladite articulation (37) est de type rotule.

4. Dispositif selon l'une quelconque des revendications 1 à 3,
**caractérisé en ce que** ledit moyen d'immobilisation (46) comporte une pluralité de bras de fixation (47) solidaires du moyen de rétention (45) et apte à coopérer avec ladite cellule (2).

5. Dispositif selon l'une quelconque des revendications 1 à 4,
**caractérisé en ce que** ladite rotule principale (40) comporte une partie partiellement sphérique (41) et une partie oscillante (42) coopérant avec ladite partie partiellement sphérique (41), ladite partie oscillante (42) étant solidaire dudit plateau (30) et ladite partie partiellement sphérique (41) étant traversée par ledit barreau (20).

6. Dispositif selon l'une quelconque des revendications 1 à 5,
**caractérisé en ce que** ledit moyen de fixation articulé (25) est un organe de liaison à deux degrés de liberté autorisant un pivotement du barreau par rapport à une cellule (2) selon deux axes de rotation (AX, AY).

7. Dispositif selon l'une quelconque des revendications 1 à 6,
**caractérisé en ce que** ledit moyen de rétention (45) est un cerceau (48).

8. Dispositif selon l'une quelconque des revendications 1 à 7,
**caractérisé en ce que** ledit plateau (30) évolue selon une translation circulaire entre deux plans (P1, P2) parallèles contenant ledit moyen de rétention (45) en l'absence de contact avec ce moyen de rétention (45).

9. Dispositif selon l'une quelconque des revendications 1 à 8,
**caractérisé en ce que** ledit organe élastique (35) est un vérin muni d'un piston (380), ledit capteur de déplacement (55) coopérant avec ledit piston (380).

10. Aéronef (1) muni d'une cellule (2) et d'un dispositif (10) de fixation et de contrôle de l'inclinaison d'une élingue (3) par rapport à ladite cellule (2), ce dispositif (10) étant muni d'un crochet-délesteur (15) portant une élingue (3) et d'un barreau (20) s'étendant selon un axe d'extension (AZ) d'une première extrémité (21) basse vers une deuxième extrémité (22) haute, ladite première extrémité (21) étant solidaire du crochet délesteur (15) et ladite deuxième extrémité (22) étant pourvue d'un moyen de fixation articulé (25) fixé à ladite cellule (2),
**caractérisé en ce que** ledit dispositif (10) est selon l'une quelconque des revendications 1 à 9.

## Patentansprüche

1. Vorrichtung (10) zur Befestigung eines Lastanhängemittels (3) an einer Kabine (2) eines Luftfahrzeugs (1) und Kontrolle der Neigung des Lastanhängemittels (3) relativ zu der Kabine (2), wobei die Vorrichtung (10) mit einem Abwurfhaken (15) versehen ist, die ein Lastanhängemittel (3) trägt und mit einem Stab (20), der sich entlang einer Erstreckungsachse (AZ) von einem ersten unteren Ende (21) zu einem oberen zweiten Ende (22) erstreckt, wobei das erste Ende (21) mit dem Abwurfhaken (15) fest verbunden ist und das zweite Ende (22) mit einem Gelenkbefestigungsmittel (25) versehen ist, das an der Kabine (2) befestigbar ist,
**dadurch gekennzeichnet, dass** die Vorrichtung (10) aufweist:
- eine Platte (30), die über mindestens drei elastische Organe (35), die jeweils mit einem Verbindungsmittel (36) versehen sind, mit der Kabine (2) verbunden ist, wobei diese Platte (30) um den Stab (20) herum an diesem mit Hilfe eines gleitenden Hauptkugelgelenks (40) befestigt ist, damit die Platte (30) gleichzeitig relativ zum Stab (20) schwingen und entlang der Erstreckungsachse (AZ) dieses Stabs (20) gleitern kann, wobei jedes elastische Organ (35) an der Platte (30) über ein Gelenk (37) angelenkt ist,
- ein Rückhaltemittel (45), welches mit einem Blockierungsmittel (46) versehen ist, welches an der Kabine (2) befestigbar ist, wobei das Rückhaltemittel (45) die Platte (30) umgibt und eine Hüllkurve (50) für den Grenzwinkel des Ausschlags der Platte (30) und des Lastanhängemittels (3) eingrenzt,
- einen Bewegungsdetektor (55) eines beweglichen Mittels (38) eines jeden elastischen Organs (35), der mit einem Alarmmittel (60) verbunden ist, um nach einem Verschwenken der Platte (30), verursacht durch einen Kontakt zwischen der Platte (30) und dem Rückhaltemittel (45) hervorgerufen durch eine Bewegung des Lastaufhängemittels (3) über den Grenzwinkel hinaus, einen Alarm auszulösen.

2. Vorrichtung nach Anspruch 1,
**dadurch gekennzeichnet, dass** das Verbindungsmittel (36) ein Kugelgelenk ist.

3. Vorrichtung nach einem der Ansprüche 1 bis 2,
**dadurch gekennzeichnet, dass** das Gelenk (37) ein Kugelgelenk ist.

4. Vorrichtung nach einem der Ansprüche 1 bis 3,
**dadurch gekennzeichnet, dass** das Blockiermittel (36) eine Mehrzahl von Befestigungsarmen (47) aufweist, die mit dem Rückhaltemittel (45) fest verbunden sind und mit der Kabine (2) zusammenwirken können.

5. Vorrichtung nach einem der Ansprüche 1 bis 4,
**dadurch gekennzeichnet, dass** das Hauptkugelgelenk (40) einen teilweise kugelförmigen Teil (41) und einen oszillierenden Teil (42) aufweist, der mit dem teilweise kugelförmigen Teil (41) zusammenwirkt, wobei der oszillierende Teil (42) mit der Platte (30) fest verbunden ist, und der teilweise kugelförmige Teil (41) von dem Stab (20) durchquert wird.

6. Vorrichtung nach einem der Ansprüche 1 bis 5,
**dadurch gekennzeichnet, dass** das Mittel zur gelenkigen Befestigung (25) ein Verbindungsorgan mit zwei Freiheitsgraden ist, welches ein Verschwenken des Stabs relativ zu einer Kabine (2) um zwei Drehachsen (AX, AY) erlaubt.

7. Vorrichtung nach einem der Ansprüche 1 bis 6,
**dadurch gekennzeichnet, dass** das Rückhaltemittel (45) ein Reifen (48) ist.

8. Vorrichtung nach einem der Ansprüche 1 bis 7,
**dadurch gekennzeichnet, dass** die Platte (30) sich in Kreisbewegungen zwischen zwei Ebenen (PI, P2), die zueinander parallel sind und das Rückhaltemittel (45) enthalten, bewegt, wenn sie nicht das Rückhaltemittel (45) berührt.

9. Vorrichtung nach einem der Ansprüche 1 bis 8,
**dadurch gekennzeichnet, dass** das elastische Organ (35) eine Kolben-Zylinder-Einheit mit einem Kolben (380) ist, wobei der Bewegungsdetektor (55) mit dem Kolben (380) zusammenwirkt.

10. Luftfahrzeug (1) mit einer Kabine (2) und einer Vorrichtung (10) zur Befestigung eines Lastanhängemittels (3) an einer Kabine (2) und Kontrolle der Neigung des Lastanhängemittels (3) relativ zu der Kabine (2), wobei die Vorrichtung (10) mit einem Abwurfhaken (15) versehen ist, der ein Lastanhängemittel (3) trägt und mit einem Stab (20), der sich entlang einer Erstreckungsachse (AZ) von einem ersten unteren Ende (21) zu einem zweiten oberen Ende (22) erstreckt, wobei das erste Ende (21) mit dem Abwurfhaken (15) fest verbunden ist, und das zweite Ende (22) mit einem Gelenkbefestigungsmittel (25) versehen ist, welches an der Kabine (2) befestigt ist,
**dadurch gekennzeichnet, dass** die Vorrichtung (10) eine Vorrichtung gemäß einem der Ansprüche 1 bis 9 ist.

## Claims

1. Device (10) for fastening and controlling the inclination of a sling (3) with respect to an airframe (2) of an aircraft (1), said device (10) being provided with a release hook (15) carrying a sling (3) and with a bar (20) extending along an extension axis (AZ) from a bottom first end (21) towards a top second end (22), said first end (21) being integral with the release hook (15) and said second end (22) being provided with an articulated fastening means (25) adapted to be fastened to said airframe (2),
**characterised in that** said device (10) comprises:
- a plate (30) connected by at least three elastic members (35) each provided with a means of connection (36) to said airframe (2), said plate (30) being fastened around the bar (20) with the aid of a sliding main ball joint (40) so that the plate (30) can simultaneously pivot with respect to the bar (20) and slide along the extension axis (AZ) of said bar (20), each elastic member (35) being articulated to the plate (30) by an articulation (37),
- a retaining means (45) provided with an immobilising means (46) adapted to be fastened to said airframe (2), said retaining means (45) surrounding the plate (30) and delimiting an envelope (50) of the limit angle of deflection of the plate (30) and of said sling (3);
- a displacement sensor (55) of a movable means (38) of each elastic member (35) connected to a warning means (60) for triggering a warning following a pivoting of said plate (30) caused by a contact between said plate (30) and the retaining means (45) induced by a displacement of the sling (3) beyond a limit angle.

2. Device according to Claim 1,
**characterised in that** said means of connection (36) is of the ball joint type.

3. Device according to any one of Claims 1 to 2,
**characterised in that** said articulation (37) is of the ball joint type.

4. Device according to any one of Claims 1 to 3,
**characterised in that** said immobilizing means (46) comprises a plurality of fastening arms (47) integral with the retaining means (45) and adapted to cooperate with said airframe (2).

5. Device according to any one of Claims 1 to 4,
**characterised in that** said main ball joint (40) comprises a partially spherical part (41) and an oscillating part (42) cooperating with said partially spherical part (41), said oscillating part (42) being integral with said plate (30) and said partially spherical part (41) being traversed by said bar (20).

6. Device according to any one of Claims 1 to 5,
**characterised in that** said articulated fastening means (25) is a connecting member with two degrees of freedom allowing a pivoting of the bar with respect to an airframe (2) along two axes of rotation (AX, AY).

7. Device according to any one of Claims 1 to 6,
**characterised in that** said retaining means (45) is a hoop (48).

8. Device according to any one of Claims 1 to 7,
**characterised in that** said plate (30) moves in a circular translation between two parallel planes (PI, P2) containing said retaining means (45) in the absence of contact with said retaining means (45).

9. Device according to any one of Claims 1 to 8,
**characterised in that** said elastic member (35) is a cylinder provided with a piston (380), said displacement sensor (55) cooperating with said piston (380).

10. Aircraft (1) provided with an airframe (2) and a device (10) for fastening and controlling the inclination of a sling (3) with respect to said airframe (2), said device (10) being provided with a release hook (15) carrying a sling (3) and with a bar (20) extending along an extension axis (AZ) from a bottom first end (21) towards a top second end (22), said first end (21) being integral with the release hook (15) and said second end (22) being provided with an articulated fastening means (25) fastened to said airframe (2),
**characterised in that** said device (10) is according to any one of Claims 1 to 9.
